# FASCICULE DE BREVET EUROPEEN

(11) **EP 3 710 151 B1**
(45) Date de publication et mention de la délivrance du brevet: **02.08.2023**
(21) Numéro de dépôt: 18800230.7
(22) Date de dépôt: 16.11.2018
(51) Int. Cl.: B01J 19/24, B01J 3/00, B01J 4/00, C02F 11/08, C02F 5/08

(54) **DISPOSITIF ET PROCÉDÉ EN CONDITIONS PROCHES DU DOMAINE SUPERCRITIQUE OU SUPERCRITIQUES**
VORRICHTUNG UND VERFAHREN UNTER BEDINGUNGEN NAHE DEM ÜBERKRITISCHEN BEREICH ODER UNTER ÜBERKRITISCHEN BEDINGUNGEN
DEVICE AND PROCESS UNDER CONDITIONS CLOSE TO THE SUPERCRITICAL RANGE OR UNDER SUPERCRITICAL CONDITIONS

(30) Priorité: 17.11.2017 FR 1760895
(43) Date de publication de la demande: 23.09.2020
(73) Titulaire: Centre National de la Recherche Scientifique, 75016 Paris (FR); Ecole Nat Superieure Arts Et Metiers Ensam, 51000 Chalons En Champagne (FR); Université de Bordeaux, 33000 Bordeaux (FR); Institut Polytechnique de Bordeaux, 33400 Talence (FR)
(72) Inventeur: AYMONIER, Cyril, 33608 Pessac Cedex (FR)
(74) Mandataire: Lavoix
(86) Numéro de dépôt international: PCT/EP2018/081652
(87) Numéro de publication internationale: WO 2019/097032

(56) Documents cités:
- WO-A1-2016/179258
- FR-A1- 2 858 943
- US-A- 5 591 415

## Description

La présente invention concerne le domaine du traitement d'un fluide aqueux contenant un sel inorganique, notamment lorsque que ce sel précipite dans des conditions proches du domaine supercritique ou supercritiques et détériore le fonctionnement d'un dispositif de traitement du fluide.

### Etat de la technique

Un fluide est dit supercritique lorsqu'il est chauffé au-delà de sa température critique et pressurisé à une pression supérieure à sa pression critique. Dans le domaine supercritique, le fluide possède des propriétés « hybrides » entre celles des liquides et celles des gaz, avec une densité proche de celle du liquide mais une faible viscosité et une haute diffusivité, caractéristiques du comportement des gaz. WO 2016/179258 A1 divulgue le traitement d'un fluide aqueux contenant au moins un sel inorganique en conditions supercritiques, comprenant la mise en contact du sel inorganique avec un flux aqueux contenant un hydroxyde, et l'ajustement de la quantité d'hydroxyde en fonction de la quantité du sel inorganique.

L'eau supercritique est un solvant utilisé dans de nombreux procédés, car elle possède des propriétés intéressantes. En particulier, sa constante diélectrique chute et fait passer l'eau d'un solvant polaire et dissociant dans les conditions normales de température et de pression (CNTP) à un solvant apolaire et non dissociant favorisant la précipitation des composés inorganiques.

Ce phénomène de précipitation entraîne de nombreux problèmes à l'échelle industrielle. Ainsi, les procédés hydrothermaux haute température sont connus pour avoir comme principale limitation le phénomène de précipitation des sels inorganiques qui conduit généralement à l'interruption du procédé, du fait de l'obstruction progressive du réacteur par le dépôt solide de sels inorganiques sur les parois. Cela restreint le choix de produits traitables à ceux ayant une faible teneur en espèces inorganiques, généralement inférieure à 10 g/L, les solutions industrielles n'étant pas à ce jour suffisamment satisfaisantes. Empêcher ou limiter le dépôt des sels dans les réacteurs permettrait ainsi d'étendre le champ d'application des procédés hydrothermaux supercritiques.

Les sels fondus sont généralement utilisés pour des applications hautes températures. En effet, leur stabilité en température, ainsi que leurs capacités calorifiques élevées, couplées à de faibles pressions de vapeur saturante et à de faibles viscosités, en font de parfaits candidats en tant que fluide caloriporteur (centrales solaires, nucléaire...). Par ailleurs, un sel fondu présente des propriétés de solvatation très particulières et peut souvent dissoudre un certain nombre de composés inorganiques. Ils sont ainsi utilisés dans l'industrie comme milieu catalytique ou bien également dans la sidérurgie. La forte polarité d'un sel fondu, ainsi que son caractère ionique, en font donc un bon solvant pour les sels inorganiques.

Le principe de l'oxydation hydrothermale supercritique pour le recyclage des déchets est connu depuis plus de 30 ans, avec de nombreuses recherches réalisées sur le sujet. Cependant, deux limitations majeures sont bien connues concernant ces procédés. La première est celle de la corrosion en fonction de la nature des déchets à traiter, notamment pour les déchets qui contiennent des halogénés. Certains problèmes de corrosion de pièces de réacteurs peuvent généralement survenir de façon plus ou moins rapide en fonction de la nature de l'alliage utilisé et des conditions d'utilisation. La deuxième limitation concerne la précipitation des sels inorganiques (sulfates, carbonates, phosphates...). Les sels sont communément présents dans l'eau et particulièrement dans les eaux usées, car ils y sont très solubles dans les conditions ambiantes de température et de pression. En revanche cette solubilité s'effondre complètement dans les conditions proches du domaine supercritique ou supercritiques, ce qui entraine la précipitation sous forme solide de ces sels. Beaucoup d'efforts ont été mis dans la recherche de solutions à cette seconde limitation via l'élaboration et l'ingénierie de réacteurs spécialement fabriqués pour limiter le phénomène d'obstruction. Malgré tous ces efforts investis dans le développement de réacteurs innovants, aucun n'a pour le moment apporté de solution définitive au problème de la précipitation des sels et peu d'entre eux ont été portés à une échelle industrielle. Le plus couramment utilisé industriellement reste le réacteur tubulaire multi-injection. Son fonctionnement repose sur le contrôle de l'exothermie des réactions d'oxydation en régulant le flux d'oxygène apporté au milieu. Cependant il reste très vulnérable aux dépôts de sel(s) solide(s) sur les parois du réacteur qui s'obstrue alors rapidement.

L'étude référencée National Research Council. 1998. Using Supercritical Water Oxidation to Treat Hydrolysate from VX Neutralization. Washington, DC: The National Academies Press (https://doi.org/10.17226/6150) écarte l'utilisation de sels fondus pour solubiliser les sels inorganiques précipités à haute température dans un procédé d'oxydation hydrothermale supercritique du fait de la forte corrosion. Cette étude fait référence à une publication du Russian Journal of Inorganic Chemistry (Borovaya, F.E. , and M.I. Ravich . 1968 . Solubility of sodium carbonate and orthophosphate in aqueous solutions of sodium hydroxide at elevated températures . Russian Journal of Inorganic Chemistry 13(12) : 1720-1722.) dans laquelle des chercheurs avaient réalisé une étude fondamentale thermodynamique de la solubilité du carbonate de sodium et de l'orthophosphate de sodium dans une solution aqueuse de soude à forte concentration et à haute température. L'étude du National Research Council considère cette approche comme inapplicable au niveau industriel.

### Buts de l'invention

Un but de la présente invention est de résoudre le problème technique consistant à fournir un dispositif et un procédé (ou méthode) limitant ou évitant le colmatage des appareillages par les sels inorganiques présents dans un fluide aqueux en conditions proches du domaine supercritique ou supercritiques.

La présente invention a aussi pour but de résoudre le problème technique consistant à dissoudre au moins en partie un ou plusieurs sels inorganiques précipités lors du passage en conditions proches du domaine supercritique ou supercritiques d'un fluide aqueux les contenant, tout en limitant ou évitant les phénomènes de corrosion.

La présente invention a encore pour but de résoudre le problème technique consistant à fournir un procédé et dispositif de traitement de déchets inorganiques dans un fluide aqueux où l'eau est en conditions proches du domaine supercritique ou supercritiques, tout en limitant ou évitant les phénomènes de corrosion. Plus particulièrement la présente invention a pour but de résoudre le problème technique consistant à fournir un dispositif et procédé d'oxydation hydrothermale supercritique (OHSC).

La présente invention a encore pour but de résoudre les problèmes techniques évoqués ci-dessus de manière industrielle, fiable et reproductible.

### Description détaillée de l'invention

Les inventeurs ont découvert, après de nombreuses années de recherche focalisées sur la compréhension du comportement des composés dans un fluide aqueux en conditions proches du domaine supercritique et supercritiques, qu'il était possible de résoudre un ou plusieurs des problèmes techniques énoncés ci-dessus. En particulier les inventeurs ont découvert qu'il était possible de solubiliser des sels inorganiques dans un sel d'hydroxyde fondu, tout en limitant ou évitant les phénomènes de corrosion, grâce à une maîtrise de la concentration ou quantité de sel d'hydroxyde à injecter en fonction de la concentration ou quantité des sels inorganiques. De nombreuses applications industrielles sont envisagées.

L'invention concerne un procédé comprenant :
- l'entrée dans un dispositif d'un fluide aqueux contenant au moins un sel inorganique, l'eau du fluide aqueux étant en conditions supercritiques ou proches du domaine supercritique dans le dispositif,
- la mesure de la concentration ou la quantité de sel inorganique dans le dispositif, cette mesure étant de préférence réalisée avant l'entrée du sel inorganique dans le dispositif,
- la mise en contact du sel inorganique avec un flux aqueux contenant au moins un sel d'hydroxyde pour obtenir dans le dispositif un mélange fluide aqueux contenant un sel inorganique et un sel d'hydroxyde,
- l'ajustement de la concentration ou la quantité du sel d'hydroxyde en fonction de la concentration ou la quantité du sel inorganique pour solubiliser au moins en partie le sel inorganique, et
   de préférence la mesure de la concentration ou la quantité de sel inorganique sortant du dispositif.

On entend par « mélange aqueux en conditions proches du domaine supercritique ou supercritiques » ou des termes équivalents comme par exemple « fluide aqueux en conditions proches du domaine supercritique ou supercritiques » ou plus généralement « en conditions proches du domaine supercritique ou supercritiques », un fluide exposé à des conditions de pression et température proches du domaine supercritique de l'eau, c'est-à-dire une pression supérieure à 22,1 MPa et une température comprise entre 300°C et 374°C, ou à des conditions de pression et de température supercritiques pour l'eau, c'est-à-dire des pression et température supérieures à la pression critique et la température critique de l'eau.

Le procédé est notamment destiné au traitement de fluides à forte teneur en sels inorganiques qui entrainent des problèmes d'obstruction dans un dispositif contenant ce fluide en conditions proches du domaine supercritique ou supercritiques, en raison de la précipitation du sel inorganique en conditions proches du domaine supercritique ou supercritiques. De manière générale, la présente invention est applicable à tout procédé hydrothermal haute température où la présence de sels inorganiques, solubles dans un fluide aqueux dans les conditions normales de température et de pression (CNTP) mais insolubles ou peu solubles dans l'eau en conditions proches du domaine supercritique ou supercritiques, entraîne des risques d'obstruction et de dépôt sur les parois du réacteur.

L'invention concerne de plus un dispositif susceptible de fonctionner en conditions supercritiques comprenant :
- des moyens de chauffage et mise sous pression aptes à placer de l'eau en conditions proches du domaine supercritique ou supercritiques,
- une conduite d'introduction dans le dispositif d'un fluide aqueux contenant au moins un sel inorganique,
- un dispositif de mesure de la concentration ou la quantité de sel inorganique dans le dispositif, de préférence la mesure étant effectuée avant l'entrée du sel inorganique dans le dispositif,
- une conduite pour la mise en contact du sel inorganique avec un flux de fluide aqueux contenant au moins un sel d'hydroxyde pour obtenir dans le dispositif un mélange fluide aqueux contenant un sel inorganique et un sel d'hydroxyde,
- un dispositif d'ajustement de la concentration ou la quantité du sel d'hydroxyde en fonction de la concentration ou la quantité du sel inorganique pour solubiliser au moins en partie le sel inorganique, et
- de préférence un dispositif de mesure de la concentration ou la quantité de sel inorganique sortant du dispositif,

L'invention concerne de plus un dispositif susceptible de fonctionner en conditions supercritiques comprenant :
- des moyens de chauffage et mise sous pression aptes à placer de l'eau en conditions proches du domaine supercritique ou supercritiques,
- une conduite d'introduction dans le dispositif d'un fluide aqueux contenant au moins un sel inorganique,
- un dispositif de mesure de la concentration ou la quantité de sel inorganique entrant dans le dispositif,
- une conduite pour la mise en contact du sel inorganique avec un flux de fluide aqueux contenant au moins un sel d'hydroxyde pour obtenir dans le dispositif un mélange fluide aqueux contenant un sel inorganique et un sel d'hydroxyde, ladite conduite comprenant un filtre, de préférence composé de billes de carbone amorphe de taille micrométrique, apte à retenir les sels inorganiques précipités et apte à faire écouler moins rapidement le sel d'hydroxyde fondu que le fluide aqueux, et
- un dispositif de mesure de la concentration à saturation du sel d'hydroxyde dans le mélange fluide aqueux.

Le procédé selon l'invention peut comprendre l'une ou plusieurs des caractéristiques suivantes, prise(s) isolément ou suivant toute combinaison techniquement possible.

Le procédé selon l'invention comprend dans un premier temps l'entrée dans un dispositif d'un fluide aqueux contenant au moins un sel inorganique, le fluide aqueux étant en conditions proches du domaine supercritique ou supercritiques dans le dispositif.

Dans un mode de réalisation, le fluide aqueux contenant le sel inorganique est introduit dans le dispositif à un débit compris entre 0.10 kg/h et 10000 kg/h, par exemple compris entre 1 et 1000kg/h, avantageusement à un débit compris entre 50 kg/h et 150 kg/h, très avantageusement à un débit compris entre 80 kg/h et 100 kg/h.

Le dispositif consiste en un ou plusieurs réacteurs pouvant supporter des températures et des pressions supérieures respectivement à la température critique et à la pression critique de l'eau. Par exemple, le dispositif peut être un réacteur usuellement utilisé dans les procédés d'oxydation hydrothermale supercritique.

Selon un mode de réalisation, le fluide aqueux contenant le sel inorganique comprend en outre des composés organiques. Ces composés organiques sont par exemple des déchets issus de procédés industriels. Par exemple, ces déchets sont des alcools.

En variante, le fluide aqueux introduit dans ledit dispositif est un mélange eau/composé organique, par exemple un mélange eau/alcool, qui permet une exothermie suffisante avec un agent oxydant, comme par exemple l'oxygène, pour atteindre les conditions proches du domaine supercritique ou supercritiques. Généralement l'exothermie permet d'atteindre les conditions supercritiques. Les conditions proches du domaine supercritique sont atteintes en général par un chauffage, le plus souvent un chauffage résistif traditionnel. Dans un mode de réalisation, la montée en température se fait dans un premier temps dans un échangeur de chaleur entre les flux sortants et entrants, puis dans un deuxième temps par exothermie de la réaction. Dans un mode de réalisation préférentiel, l'alcool est choisi parmi les monoalcools en C₂-C₅, les polyols en C₂-C₅ et leurs mélanges. De manière préférentielle, le mélange eau/alcool est un mélange eau/butanol/propanol

Avantageusement, l'eau du fluide aqueux est en conditions proches du domaine supercritique ou supercritiques dans le dispositif. Par exemple, le mélange aqueux est chauffé entre 300°C et 600°C, par exemple entre 350°C et 550°C, et est porté à une pression comprise entre 22.1 et 50 MPa, par exemple entre 22.1 et 30 MPa.

Le fluide aqueux est placé en conditions proches du domaine supercritique ou supercritiques à l'intérieur du dispositif ou est introduit dans le dispositif directement en conditions proches du domaine supercritique ou supercritiques.

Le sel inorganique présent dans le fluide aqueux est choisi parmi les sels insolubles dans le mélange aqueux dans les conditions proches du domaine supercritique ou supercritiques de l'eau. Avantageusement, il est choisi parmi les sels d'halogénures, les sels alcalins, les sels alcalino-terreux et les sels métalliques.

Selon une autre variante, le procédé de la présente invention couvre le traitement de fluides aqueux comprenant un sel de phosphate, un sel de sulfate et/ou un sel de carbonate.

Selon une autre variante, le procédé de la présente invention couvre le traitement de fluides aqueux comprenant un sel d'halogénure, typiquement de chlorure.

Selon un mode de réalisation, le sel inorganique est choisi parmi les chlorures tels que par exemple le chlorure de brome (BrCI), le chlorure de cobalt (II) (CoCl₂), le chlorure d'aluminium (AlCl₃), le chlorure d'ammonium (NH₄Cl), le chlorure d'argent (AgCI), le chlorure de calcium (CaCl₂), le chlorure de cuivre (I) (CuCl), le chlorure de cuivre (II) (CuCl₂), le chlorure de fer (II) (FeCl₂), le chlorure de sodium (NaCl), le chlorure de zinc (ZnCl₂), le chlorure d'or (III) (AuCl₃), le chlorure de plomb (II) (PbCl₂), le chlorure de lithium (LiCI), le chlorure de magnésium (MgCl₂), le chlorure de manganèse (II) (MnCl₂), le chlorure de mercure (II) (HgCl₂), le chlorure de nickel (II) (NiCl₂), le chlorure de potassium (KCI) ou le chlorure d'étain (II) (SnCl₂), parmi les fluorures tels que par exemple le fluorure d'aluminium (AlF₃), le fluorure de cobalt (II) (CoF₂) le fluorure d'ammonium (NH₄F), le fluorure d'argent (AgF), le fluorure de calcium (CaF₂), le fluorure de fer (III) (FeF₃), le fluorure de sodium (NaF), le fluorure de cuivre (II) (CuF₂), le fluorure de zinc (ZnF₂), le fluorure de lithium (LiF), le fluorure de plomb (II) (PbF₂), le fluorure de magnésium (MgF₂), le fluorure de manganèse (II) (MnF₂), le fluorure de nickel (II) (NiF₂), le fluorure de mercure (HgF₂), le fluorure de potassium (KF) ou le fluorure d'étain (II) (SnF₂), parmi les bromures tels que par exemple le bromure de cobalt (II) (CoBr₂), le bromure d'ammonium (NH₄Br), le bromure d'argent (AgBr), le bromure de calcium (CaBr₂), le bromure de cuivre (II) (CuBr₂), le bromure de fer (II) (FeBr₂), le bromure de sodium (NaBr), le bromure de zinc (ZnBr₂), le bromure de plomb (II) (PbBr₂), le bromure de lithium (LiBr), le bromure de magnésium (MgBr₂), le bromure de manganèse (II) (MnBr₂), le bromure de nickel (II) (NiBr₂), le bromure de mercure (II) (HgBr₂), le bromure de platine (PtBr₄), le bromure de potassium (KBr) ou le bromure d'étain (II) (SnBr₂), parmi les iodures tels que par exemple l'iodure d'ammonium (NH₄I), l'iodure de calcium (CaI₂), l'iodure de cobalt (II) (CoI₂), l'iodure de cuivre (I) (Cul), l'iodure de sodium (Nal), l'iodure de zinc (ZnI₂), l'iodure de plomb (II) (PbI₂), l'iodure de lithium (Lil), l'iodure de magnésium (MgI₂), l'iodure de mercure (II) (HgI₂), l'iodure de nickel (II) (NiI₂), l'iodure de potassium (KI) ou l'iodure d'étain (II) (SnI₂), parmi les carbonates tels que par exemple le carbonate d'ammonium ((NH4)₂CO₃), le carbonate d'argent (Ag₂CO₃), le carbonate de calcium (CaCO₃), le carbonate de cuivre (II) (CuCO₃), le carbonate de fer (II) (FeCO₃), le carbonate de sodium (Na₂CO₃), le carbonate de zinc (ZnCO₃), le carbonate de plomb (II) (PbCO₃), le carbonate de lithium (Li₂CO₃), le carbonate de magnésium (MgCO₃), le carbonate de manganèse (MnCO₃), le carbonate de nickel (II) (NiCO₃), le carbonate de mercure (I) (Hg₂CO₃) ou le carbonate de potassium (K₂CO₃), parmi les sulfates tels que par exemple le sulfate de cobalt (II) (CoSO₄), le sulfate d'aluminium (Al₂(SO₄)₃), le sulfate d'ammonium ((NH₄)₂SO₄), le sulfate d'argent (Ag₂SO₄), le sulfate de baryum (BaSO₄), le sulfate de sodium (Na₂SO₄), le sulfate de plomb (II) (PbSO₄), le sulfate de lithium (Li₂SO₄), le sulfate de zinc (ZnSO₄), le sulfate de cuivre (II) pentahydraté (CuSO₄·5H₂O) le sulfate de fer heptahydraté (FeSO₄·7H₂O), le sulfate de magnésium (MgSO₄), le sulfate de manganèse (MnSO₄), le sulfate de mercure (I) (Hg₂SO₄), le sulfate de nickel (II) hexahydraté (NiSO₄·6H₂O), le sulfate de potassium (K₂SO₄) ou le sulfate d'étain (II) (SnSO₄), parmi les phosphates tels que par exemple le phosphate d'aluminium (AlPO₄), le phosphate d'ammonium ((NH₄)₃PO₄), le phosphate de calcium (Ca₃(PO₄)₂), le phosphate de sodium (Na₃PO₄), le phosphate de lithium (Li₃PO₄), le phosphate de magnésium (Mg₃(PO₄)₂), le phosphate d'argent (Ag₃PO₄), le phosphate de zinc octahydraté (Zn₂(PO₄)₃·8H₂O), le phosphate de fer (II) octahydraté (Fe₃(PO₄)₂·8H₂O), le phosphate de plomb (II) (Pb₃(PO₄)₂), le phosphate de baryum (Ba₃(PO₄)₂) ou le phosphate de potassium (K₃PO₄), parmi les chromates tels que par exemple le chromate d'argent (Ag₂CrO₄), le chromate de calcium (CaCrO₄), le chromate de cuivre (II) (CuCrO₄), le chromate de sodium (Na₂CrO₄), le dichromate de sodium (Na₂Cr₂O₇), le chromate de plomb (II) (PbCrO₄), le chromate de mercure (I) (Hg₂CrO₄), le chromate de potassium (K₂CrO₄) ou le dichromate de potassium (K₂Cr₂O₇), les nitrates tels que par exemple le nitrate de chrome (III) (Cr(NO₃)₃), le nitrate de cobalt (II) (Co(NO₃)₂), le nitrate d'aluminium (Al(NO₃)₃), le nitrate d'ammonium (NH₄NO₃), le nitrate d'argent (AgNO₃), le nitrate de calcium (Ca(NO₃)₂), le nitrate de cuivre (II) (Cu(NO₃)₂), le nitrate de fer (II) hexahydraté (Fe(NO₃)₂·6H₂O), le nitrate de sodium (NaNO₃), le nitrate de zinc (Zn(NO₃)₂), le nitrate de plomb (II) (Pb(NO₃)₂), le nitrate de lithium (LiNO₃), le nitrate de manganèse (II) (Mn(NO₃)₂), le nitrate de magnésium (Mg(NO₃)₂), le nitrate de nickel (II) (Ni(NO₃)₂) et le nitrate de potassium (KNO₃), les perchlorates tels que par exemple le perchlorate de chrome (Cr(ClO₄)₃), le perchlorate de cobalt (II) (Co(ClO₄)₂), le perchlorate d'aluminium (Al(ClO₄)₃), le perchlorate d'argent (AgClO₄), le perchlorate de calcium (Ca(ClO₄)₂), le perchlorate de cuivre (II) (Cu(ClO₄)₂), le perchlorate de fer (II) (Fe(ClO₄)₃), le perchlorate de sodium (NaClO₄), le perchlorate de lithium (LiClO₄), le perchlorate de magnésium (Mg(ClO₄)₂), le perchlorate de mercure (I) (Hg₂(ClO₄)₂), le perchlorate de nickel (II) (Ni(ClO₄)₂) ou le perchlorate de potassium (KClO₄), parmi les acétates tels que par exemple l'acétate d'argent (AgC₂H₃O₂), l'acétate de sodium (CH₃COONa), l'acétate de zinc (II) (Zn(C₂H₃O₂)₂), l'acétate de lithium (LiC₂H₃O₂), l'acétate de magnésium (Mg(C₂H₃O₂)₂), l'acétate de mercure (II) (Hg(C₂H₃O₂)₂) ou l'acétate de potassium (KC₂H₃O₂), parmi les chlorates tels que par exemple le chlorate de cobalt (II) (Co(ClO₃)₂), le chlorate d'ammonium (NH₄ClO₃), le chlorate de calcium (Ca(ClO₃)₂), le chlorate de sodium (NaClO₃), le chlorate de zinc (Zn(ClO₃)₂), le chlorate de plomb (II) (Pb(ClO₃)₂), le chlorate de lithium (LiClO₃), le chlorate de magnésium (Mg(ClO₃)₂), le chlorate de mercure (II) (Hg(ClO₃)₂), le chlorate de nickel (II) (Ni(ClO₃)₂) ou le chlorate de potassium (KClO₃), parmi les thiocyanates tels que par exemple le thiocyanate d'ammonium (NH₄SCN), le thiocyanate de cuivre (I) (CuSCN), le thiocyanate de plomb (II) (Pb(SCN)₂), le thiocyanate de lithium (LiSCN), le thiocyanate de mercure (II) (Hg(SCN)₂) ou le thiocyanate de potassium (KSCN), les hydrogénocarbonates tels que par exemple l'hydrogénocarbonate de potassium (KHCO₃), l'hydrogénocarbonate de lithium (LiHCO₃), l'hydrogénocarbonate de sodium (NaHCO₃) ou l'hydrogénocarbonate de calcium (Ca(HCO₃)₂) ou parmi les permanganates tels que par exemple le permanganate de calcium (Ca(MnO₄)₂), le permanganate de zinc (Zn(MnO₄)₂) ou le permanganate de potassium (KMnO₄). Selon un mode de réalisation, le sel inorganique est choisi parmi les sels pouvant être re-solubilisés dans l'eau en revenant aux CNTP après passage en conditions proches du domaine supercritique ou supercritiques.

De manière préférentielle, le sel inorganique est choisi de sorte que la différence entre la température de précipitation dudit sel inorganique et la température critique de l'eau est inférieure à 150°C, avantageusement inférieure à 50°C. Dans un mode de réalisation, la concentration en sel inorganique entrant dans le dispositif est supérieure ou égale à la limite de solubilité dudit sel dans les conditions proches du domaine supercritique ou supercritiques. Elle est par exemple comprise entre 0,1 g/L et 100 g/L. Avantageusement, elle est comprise entre 1 g/L et 100 g/L, de manière préférentielle entre 5 g/L et 50 g/L.

La concentration ou la quantité de sel inorganique dans le dispositif est mesurée directement ou indirectement. Cette mesure est de préférence réalisée avant l'entrée du sel inorganique dans le dispositif. Elle est par exemple réalisée par spectrométrie à plasma à couplage inductif dans des conditions usuelles et évidentes pour l'homme du métier.

Un fluide aqueux contenant au moins un sel d'hydroxyde est introduit dans le dispositif et mis en contact avec le fluide aqueux contenant au moins un sel inorganique.

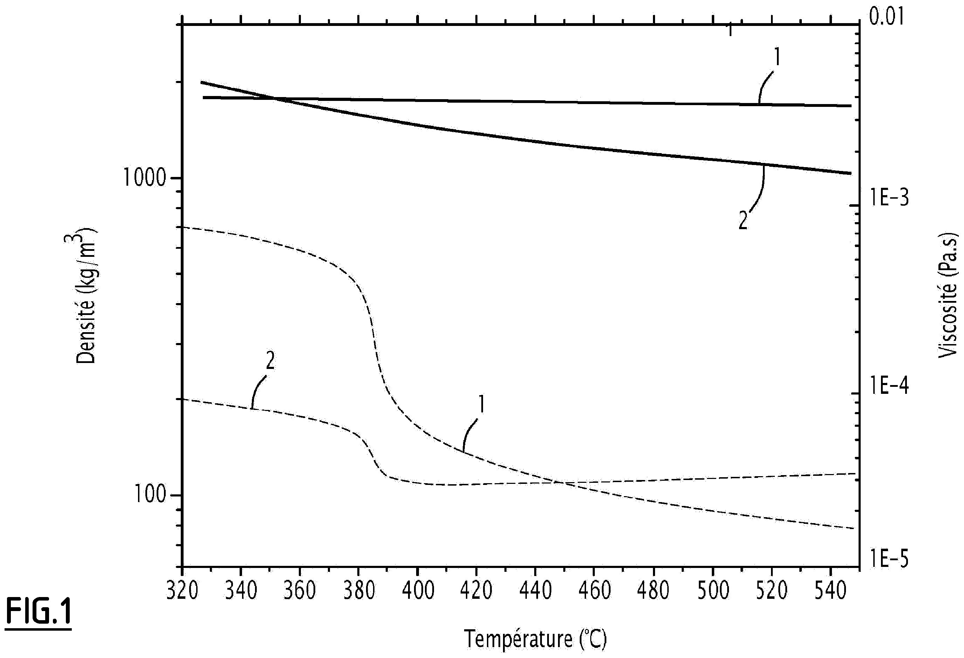

Le sel d'hydroxyde est avantageusement choisi parmi l'hydroxyde de potassium, l'hydroxyde de sodium (soude) et l'hydroxyde de lithium. A titre d'exemple, la Figure 1 compare les propriétés de viscosité (courbes 2) et de densité (courbes 1) entre l'eau (en pointillés) et la soude fondue (en traits pleins).

Selon un mode de réalisation, le fluide aqueux contenant au moins un sel d'hydroxyde est un mélange eau/sel d'hydroxyde en présence d'au moins un composé s'oxydant en présence de dioxygène selon une réaction exothermique. Selon un mode de réalisation, le fluide aqueux contenant au moins un sel d'hydroxyde est un mélange eau/sel d'hydroxyde/alcool afin de permettre une exothermie suffisante pour atteindre les conditions proches du domaine supercritique ou supercritiques. De manière préférentielle, l'alcool est choisi parmi les monoalcools en C₂-C₅, les polyols en C₂-C₅, avantageusement les diols, et leurs mélanges. Avantageusement, le mélange eau/sel d'hydroxyde/alcool est un mélange eau/soude/alcool, avantageusement un mélange eau/soude/hexanediol.

Le fluide aqueux contenant le sel d'hydroxyde est injecté dans le dispositif alternativement au fluide aqueux contenant le sel inorganique de manière à continuellement empêcher les sels inorganiques de se déposer dans le dispositif. La quantité de sel d'hydroxyde adéquate en fonction de la concentration en espèces inorganiques dans le produit à traiter est ajoutée directement dans le dispositif au fluide aqueux contenant le sel inorganique. En variante, l'injection du fluide aqueux contenant le sel d'hydroxyde est couplée avec celle du fluide à traiter afin de pouvoir adapter non plus la concentration de sel d'hydroxyde de départ mais le rapport des flux d'entrée entre sel d'hydroxyde et sel inorganique. Cela permet notamment d'utiliser une seule solution de sel d'hydroxyde pour différents types de déchets, en adaptant simplement les débits de chacun des flux.

Dans un mode de réalisation, le flux aqueux contenant le sel d'hydroxyde est introduit dans le dispositif à un débit compris entre 0.10 kg/h et 10000 kg/h, par exemple compris entre 1 et 1000kg/h, avantageusement à un débit compris entre 50 kg/h et 150 kg/h, très avantageusement à un débit compris entre 80 kg/h et 100 kg/h.

En variante, le fluide aqueux contenant le sel d'hydroxyde est mélangé au fluide aqueux contenant le sel inorganique avant l'entrée de ce dernier dans le dispositif.

En variante, le fluide aqueux contenant le sel d'hydroxyde est injecté en discontinu par impulsion dans le dispositif. Le fluide aqueux contenant le sel d'hydroxyde est injecté ponctuellement à intervalles réguliers afin de réduire la quantité de sel déposé dans le réacteur. Cette approche est particulièrement avantageuse puisqu'elle permet de limiter la concentration ou la quantité de sel d'hydroxyde présente dans le dispositif et ainsi de limiter, voire d'éviter, d'autant plus les phénomènes de corrosion. La solution de produits à traiter est injectée en continue pendant une durée fixée, que nous appellerons t1. Au bout de cette durée t1, l'augmentation du différentiel de pression dans le système, due au dépôt progressif de sel, a atteint une limite fixée par le procédé. L'injection de produit est alors coupée afin de basculer sur l'injection du fluide aqueux contenant le sel d'hydroxyde, qui est alors injecté pendant une durée t2. A la fin de cette durée t2, l'injection est de nouveau basculée sur le produit à traiter pendant une nouvelle durée t1, et ainsi de suite. Cette manière de procéder permet notamment d'éliminer ponctuellement les bouchons de sels formés. Le sel d'hydroxyde peut en outre participer aux réactions mises en jeu dans le dispositif. Connaissant les limites de solubilité des espèces inorganiques présentes, la quantité de sel précipité pendant la durée t1 peut de ce fait être estimée, afin de déterminer la durée d'injection de sel d'hydroxyde nécessaire (connaissant la concentration dudit sel d'hydroxyde) pour dissoudre le sel déposé.

Avantageusement, le différentiel de pression entre l'entrée et la sortie du dispositif est mesuré et le fluide aqueux contenant le sel d'hydroxyde est injecté quand ledit différentiel dépasse une valeur seuil de différentiel de pression prédéterminée. Dans un mode de réalisation, cette valeur seuil est comprise entre 0,5 et 5 MPa, de manière préférentielle entre 2 et 3 MPa.

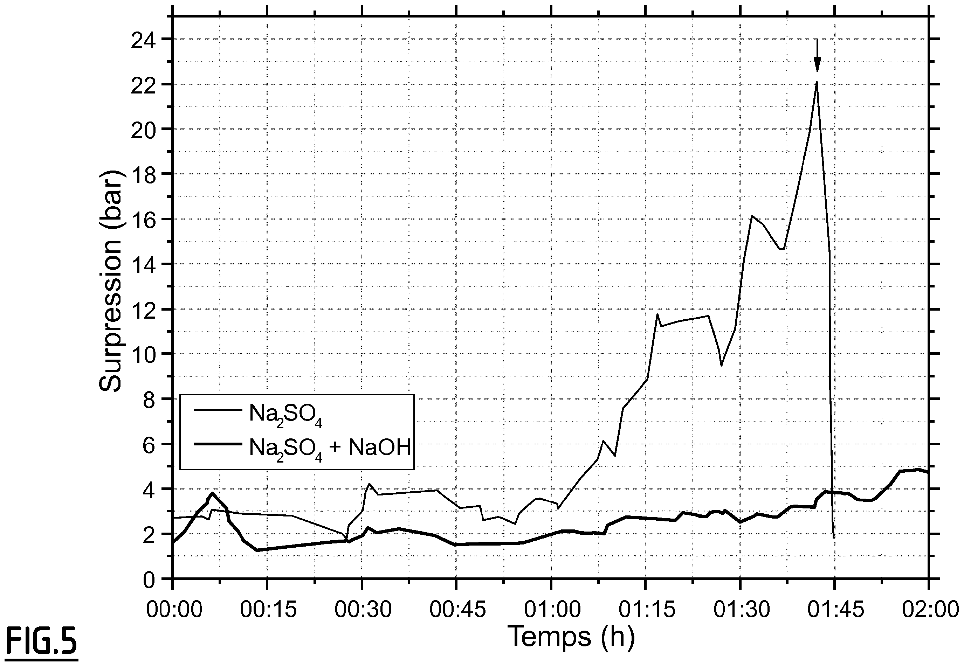

Dans un mode de réalisation particulier, l'injection par impulsion d'une solution de soude à un fluide aqueux contenant du sulfate de sodium permet de limiter le colmatage du dispositif et donc l'augmentation de la pression dans le réacteur, comme représenté sur la Figure 5. Un arrêt prématuré du procédé, indiqué par une flèche sur la Figure 5, est ainsi évité.

Un mélange fluide aqueux contenant un sel inorganique et un sel d'hydroxyde est obtenu dans le dispositif. Dans les conditions proches du domaine supercritique ou supercritiques de l'eau, le sel d'hydroxyde précipite puis fond pour former une phase sel fondu. Le sel inorganique précipité dans le fluide aqueux se dissout dans la phase sel fondu.

La concentration ou la quantité de sel d'hydroxyde est ajustée en fonction de la propre limite de solubilité dudit sel d'hydroxyde à la pression et la température données et de la concentration en espèces inorganiques présentes dans le fluide à traiter. Si la solubilité du composé inorganique dans le sel d'hydroxyde est connue, alors la concentration de sel d'hydroxyde doit être ajustée selon cette valeur. Dans le cas où cette valeur n'est pas connue, la concentration de sel d'hydroxyde peut alors être ajustée sur la base d'une solubilité comprise entre 30 et 60% massique, avantageusement entre 35 et 45% massique. Dans un mode de réalisation, la concentration de sel d'hydroxyde est supérieure ou égale à la limite de solubilité du sel en conditions proches du domaine supercritique ou supercritiques, par exemple entre 1 g/L et 200g/L, avantageusement entre 2 g/L et 200g/L, de manière préférentielle entre 10 g/L et 100g/L.

Selon une variante, la quantité (ou la concentration) de sel d'hydroxyde est ajustée de sorte que la quantité (ou la concentration) de sel inorganique sortant du dispositif est supérieure à 60%, avantageusement supérieure à 75%, de manière préférentielle supérieure à 90% de la quantité (ou la concentration) de sel inorganique entrant dans le dispositif. Plus la quantité (ou la concentration) de sel inorganique sortant du dispositif est élevée, moins il y a de sels inorganiques sous forme de précipité dans le dispositif et donc moins le risque d'obstruction du dispositif est élevé.

L'ajustement de la concentration ou de la quantité du sel d'hydroxyde en fonction de la concentration ou la quantité du sel inorganique est mis en oeuvre de façon répétée discontinue ou en continu. L'ajustement de la concentration ou de la quantité du sel en fonction de la concentration ou la quantité du sel inorganique comprend un suivi de la concentration en sel inorganique en entrée. En variante, la concentration en sel inorganique est suivie en sortie du dispositif. Le suivi de la concentration en sel inorganique est avantageusement réalisé par spectrométrie à plasma à couplage inductif (spectrométrie ICP).

L'ajustement de la concentration ou de la quantité du sel d'hydroxyde injectée permet de limiter la corrosion au sein du dispositif.

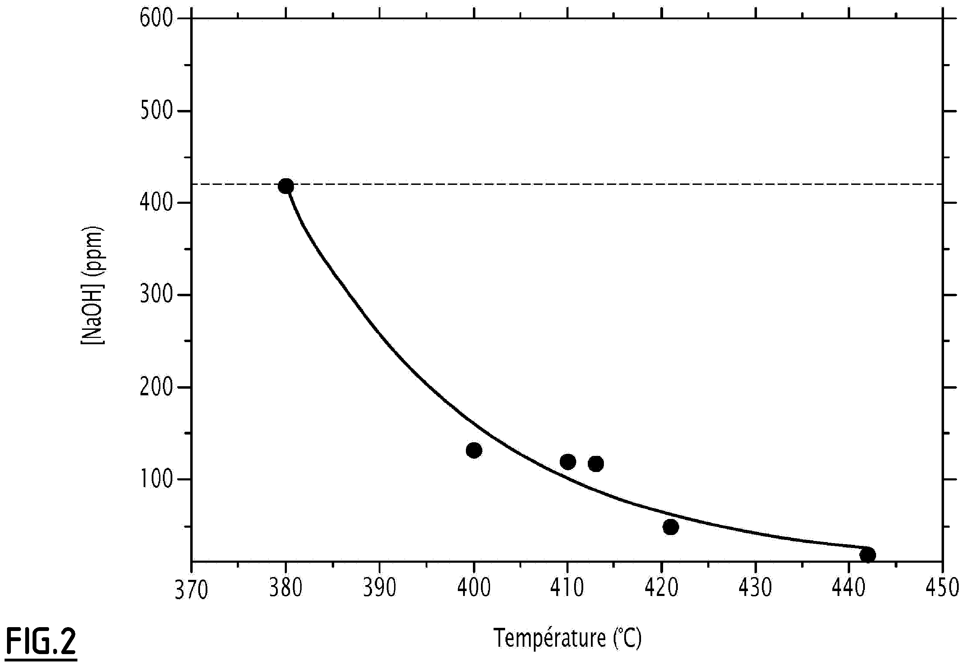

De manière préférentielle, le procédé selon l'invention comprend une étape préliminaire de mesure de la solubilité du sel d'hydroxyde dans le mélange fluide aqueux en conditions proches du domaine supercritique ou supercritiques. Cette étape préliminaire de mesure est par exemple réalisée dans un montage composé d'un tube métallique dans lequel circule en continu un fluide aqueux contenant un sel d'hydroxyde de concentration connue. Le tube est chauffé à la température voulue et pressurisé à 25 MPa. Le tube est à moitié rempli d'un filtre composé de billes de carbone amorphe de taille micrométrique, d'une part afin d'empêcher les sels inorganiques précipités solides d'être entrainés dans le flux, d'autre part afin de pouvoir ralentir l'écoulement du sel d'hydroxyde fondu liquide et de permettre de mesurer une concentration à saturation. Le principe consiste en effet à jouer sur les différences de densité et de viscosité entre la soude fondue et l'eau supercritique, en utilisant des débits de l'ordre de 1 mL/min afin d'éviter les phénomènes de turbulences. Du fait de ces différences, les deux phases ne s'écouleront pas à la même vitesse au travers du filtre qui agit comme un milieu poreux, ce qui permet de pouvoir mesurer en sortie la concentration à saturation en sel restant dans l'eau par prélèvement et mesure par spectrométrie à plasma à couplage inductif. La valeur mesurée correspond en fait à la valeur de solubilité du sel d'hydroxyde dans le fluide aqueux pour la température donnée. Après un certain temps, la concentration en sel revient à sa valeur initiale, ce qui signale le moment où l'écoulement du sel fondu a atteint la sortie du montage et le système est alors en régime stationnaire. On peut alors réitérer l'opération pour différentes températures et ainsi obtenir la courbe de solubilité du sel en question. La Figure 2 représente ainsi la solubilité de la soude dans l'eau à 25 MPa en fonction de la température.

De préférence, la connaissance de ces valeurs de solubilité de sel d'hydroxyde permet d'évaluer la proportion de la phase sel fondu formée après précipitation et ainsi de déterminer la quantité maximale de sel inorganique soluble dans cette phase sel d'hydroxyde fondu.

De manière préférentielle, le procédé comprend une étape préliminaire de mesure de la solubilité du sel inorganique dans le sel d'hydroxyde fondu en conditions proches du domaine supercritique ou supercritiques. Cette étape de mesure consiste par exemple à injecter une solution aqueuse d'un sel inorganique, de concentration connue, afin de faire précipiter le sel et d'effectuer un dépôt sur les parois du réacteur, en s'assurant que la concentration de sortie est bien celle de la limite de solubilité dans les conditions proches du domaine supercritique ou supercritiques de l'eau. Dans un second temps, l'injection de la solution salée est interrompue pour pouvoir injecter une solution d'un sel d'hydroxyde de concentration connue dans le système. Le but de cette seconde partie est de faire précipiter le sel d'hydroxyde, qui en fondant vient dissoudre le dépôt du sel inorganique, qui est alors entrainé dans le flux avec le sel inorganique pour ensuite se dissoudre dans l'eau en conditions souscritiques. On mesure alors, par prélèvement en sortie, les concentrations respectives en sel d'hydroxyde et en sel inorganique et on obtient la proportion de sel dissout par le sel d'hydroxyde fondu. Plusieurs prélèvements à intervalles de temps réguliers, pour une même température, sont effectués afin de vérifier que la concentration limite en sel inorganique dans le sel d'hydroxyde fondu a bien été atteinte. Cette étape permet de connaître la solubilité du sel inorganique dans le sel d'hydroxyde et ainsi d'ajuster de façon optimale la concentration ou la quantité dudit sel d'hydroxyde à introduire afin de solubiliser le sel inorganique précipité dans le réacteur.

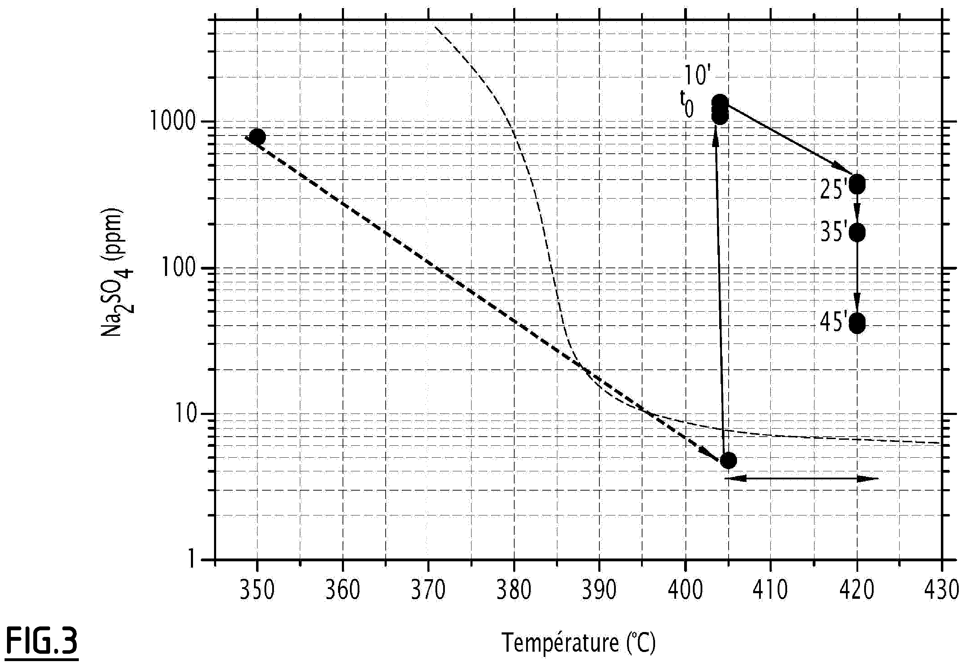

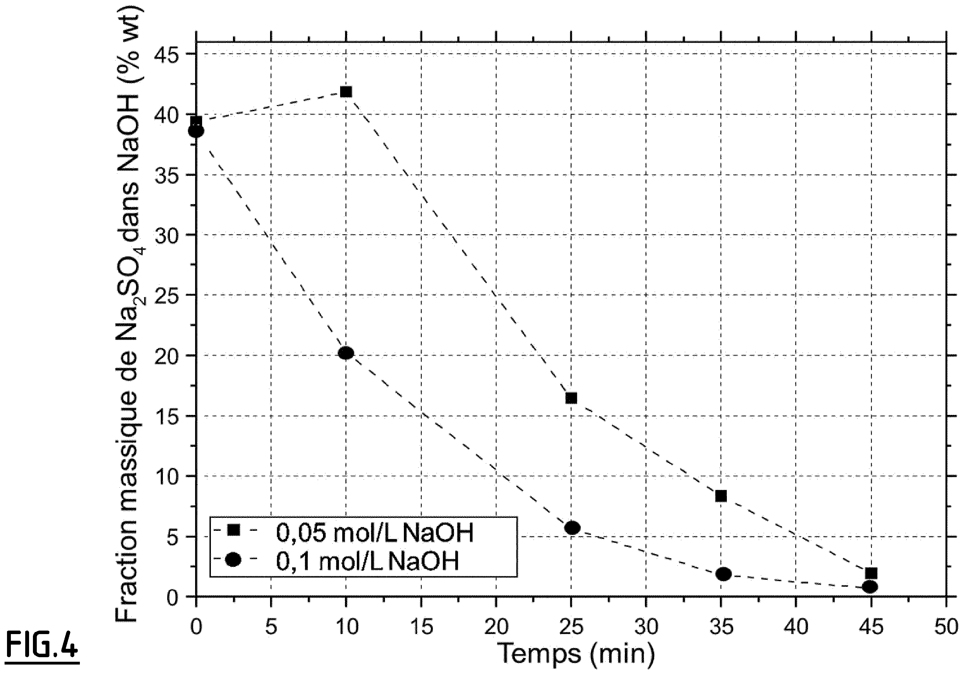

Dans un mode de réalisation particulier, cette étape préliminaire est réalisée pour mesurer la solubilité du sulfate de sodium dans de la soude dans les conditions supercritiques de l'eau, comme représenté sur la Figure 3. La courbe en pointillés représente la solubilité du sulfate de sodium dans l'eau à 25 MPa. A t₀, une solution de soude est injectée. Les données de fractions massiques de Na₂SO₄ contenues dans la phase sel fondu de soude, en fonction du temps et de la concentration de la solution de soude, tendent à montrer que la saturation semble se situer autour de 40% massique en sel dans la soude, pour des températures entre 400 et 420 °C, comme illustré par la Figure 4.

Le procédé selon l'invention peut être un procédé d'oxydation hydrothermale supercritique de traitement d'un fluide aqueux contenant des sels inorganiques.

Selon une variante, le fluide aqueux est placé dans des conditions de pression et températures inférieures aux conditions proches du domaine supercritique ou supercritiques après la sortie du dispositif dans lequel le fluide aqueux est en conditions proches du domaine supercritique ou supercritiques. Typiquement, le fluide aqueux est placé dans les conditions normales de température et pression (CNTP) après la sortie du dispositif dans lequel le fluide aqueux est en conditions proches du domaine supercritique ou supercritiques.

L'invention concerne aussi un dispositif susceptible de fonctionner en conditions proches du domaine supercritique ou supercritiques comprenant des moyens de chauffage et mise sous pression aptes à placer de l'eau en conditions proches du domaine supercritique ou supercritiques , une conduite d'introduction dans le dispositif d'un fluide aqueux contenant au moins un sel inorganique, un dispositif de mesure de la concentration ou la quantité de sel inorganique dans le dispositif, la mesure étant effectuée de préférence avant l'entrée du sel inorganique dans le dispositif, une conduite pour la mise en contact du sel inorganique avec un flux aqueux contenant au moins un sel d'hydroxyde pour obtenir dans le dispositif un mélange fluide aqueux contenant un sel inorganique et un sel d'hydroxyde, un dispositif d'ajustement de la concentration ou la quantité du sel d'hydroxyde en fonction de la concentration ou la quantité du sel inorganique pour solubiliser au moins en partie le sel inorganique et de préférence un dispositif de mesure de la concentration ou la quantité de sel inorganique sortant du dispositif.

Les moyens de chauffage et de mise sous pression aptes à placer de l'eau en conditions proches du domaine supercritique ou supercritiques sont des moyens usuels pour l'homme du métier.

Selon un mode de réalisation, le fluide aqueux contenant le sel d'hydroxyde est injecté dans le dispositif alternativement au fluide aqueux contenant le sel inorganique. En variante, il est mélangé au fluide aqueux contenant le sel inorganique avant l'entrée de ce dernier dans le dispositif. En variante, il est injecté en discontinu par impulsion dans le dispositif.

Avantageusement, le fluide aqueux contenant au moins un sel inorganique est stocké dans un réservoir de stockage en communication fluidique avec le dispositif de l'invention.

Le dispositif comprend des moyens aptes à placer l'eau du mélange aqueux en conditions proches du domaine supercritique ou supercritiques dans le dispositif.

Avantageusement, le mélange aqueux est chauffé entre 300°C et 600°C, par exemple entre 350°C et 550°C, et est porté à une pression comprise entre 22.1 et 50 MPa, avantageusement entre 22.1 et 30 MPa.

Selon un mode de réalisation, le dispositif comprend une conduite de sortie du mélange fluide, laquelle comprend des moyens de passage en conditions sous-critiques, c'est à dire à une température et pression inférieures à la température critique et la pression critique de l'eau, et de préférence en CNTP. Ce passage hors des conditions proches du domaine supercritique ou supercritiques a généralement pour conséquence de resolubiliser l'ensemble des sels. Ainsi, selon une variante, on peut séparer facilement le sel inorganique du fluide aqueux, en particulier pour son utilisation ultérieure, son recyclage ou sa valorisation (par exemple sa commercialisation). De tels moyens de séparation sont connus de l'homme du métier. Selon une variante, le sel d'hydroxyde est recyclé en entrée du dispositif, éventuellement par l'intermédiaire d'un réservoir de stockage.

L'invention concerne de plus un dispositif de mesure de solubilité susceptible de fonctionner en conditions supercritiques comprenant des moyens de chauffage et mise sous pression aptes à placer de l'eau en conditions proches du domaine supercritique ou supercritiques, une conduite d'introduction dans le dispositif d'un fluide aqueux contenant au moins un sel inorganique, un dispositif de mesure de la concentration ou la quantité de sel inorganique entrant dans le dispositif, une conduite pour la mise en contact du sel inorganique avec un flux aqueux contenant au moins un sel d'hydroxyde pour obtenir dans le dispositif un mélange fluide aqueux contenant un sel inorganique et un sel d'hydroxyde, ladite conduite comprenant un filtre apte à retenir les sels inorganiques précipités et apte à faire écouler moins rapidement le sel d'hydroxyde fondu que le fluide aqueux et un dispositif de mesure de la concentration à saturation du sel d'hydroxyde dans le mélange fluide aqueux.

Dans un mode de réalisation, les moyens de chauffage et de mise sous pression aptes à placer de l'eau en conditions proches du domaine supercritique ou supercritiques sont des moyens usuels pour l'homme du métier.

Dans un mode de réalisation, le dispositif comprend un réservoir contenant un fluide aqueux contenant au moins un sel d'hydroxyde. Ledit réservoir comprend une pompe pour permettre l'injection dudit fluide aqueux dans une conduite où circule un fluide aqueux contenant au moins un sel inorganique.

Dans un mode de réalisation, ladite conduite comprend un filtre composé de billes de carbone amorphe de taille micrométrique, qui est apte à retenir les sels inorganiques précipités et apte à faire écouler moins rapidement le sel d'hydroxyde fondu que le fluide aqueux.,

Dans un mode de réalisation se trouve en sortie de la conduite un système de refroidissement apte à refaire passer l'eau du mélange aqueux en conditions sous-critiques.

Selon un mode de réalisation, le dispositif de mesure de solubilité comprend en outre un appareil permettant de mesurer la concentration de sel inorganique sortant du dispositif. Avantageusement, cet appareil comprend une cellule conductimétrique.

Dans un mode de réalisation, ledit dispositif de mesure est directement placé en sortie du système de refroidissement auquel il est relié. En variante, ledit dispositif n'est pas relié au système de refroidissement et nécessite de réaliser des prélèvements en sortie du refroidisseur.

Dans un mode de réalisation, le dispositif comporte un régulateur de contre-pression pour réguler la pression au sein du dispositif.

Dans un mode de réalisation, le dispositif comporte en sortie de la conduite un système de prélèvement du fluide permettant de récolter ledit fluide afin d'effectuer dessus des mesures, telle qu'une mesure de pH.

La dissolution des sels inorganiques dans le sel d'hydroxyde fondu permet de limiter, voire d'empêcher, le colmatage du dispositif utilisé lors d'un procédé hydrothermal à haute température. Elle permet d'éviter de longs temps de mise à l'arrêt du procédé pour le nettoyage des réacteurs, ainsi que l'alternance répétée de phase de démarrage-arrêt. La détermination de la concentration ou de la quantité optimale de sel d'hydroxyde à introduire dans le dispositif en fonction de la concentration ou de la quantité de sels inorganiques présents dans le fluide aqueux permet d'ajuster le procédé afin de limiter les phénomènes de corrosion et d'obtenir un procédé industriel fiable. Ainsi, le procédé permet de contrôler l'injection de sel d'hydroxyde et donc de limiter la concentration ou la quantité injectée. Cela permet d'éviter ou au moins de réduire les phénomènes de corrosion au sein du dispositif. Ainsi, le dispositif et le procédé de l'invention comprennent avantageusement un dispositif de contrôle de la concentration de sel d'hydroxyde présent ou injecté dans le dispositif en conditions proches du domaine supercritique ou supercritiques.

L'invention permet en outre d'étendre le champ des déchets traitables par procédé hydrothermal haute température à des déchets ayant une teneur en sel supérieure à 10 g/L.

### Brève description des figures

La Figure 1 représente les densités (courbes 1) et viscosités (courbes 2) respectives de l'eau (traits en pointillés) et de la soude fondue (traits pleins) en fonction de la température.
La Figure 2 représente la solubilité de la soude dans l'eau à 25 MPa en fonction de la température, mesurée selon le protocole de l'exemple 1.
La Figure 3 représente la solubilité du sulfate de sodium dans l'eau à 25 MPa (en pointillés) et l'évolution de la concentration de sulfate de sodium en sortie du procédé pendant la précipitation et le dépôt de sel, puis pendant le passage en soude à 0.05 mol/L, pour différents temps et différentes températures dans un mode de réalisation particulier, selon le protocole de l'exemple 2.
La Figure 4 représente l'évolution des fractions massiques de sulfate de sodium dans la phase soude fondue en fonction du temps, pour différentes concentrations de solutions de soude dans un mode de réalisation décrit dans l'exemple 2.
La Figure 5 représente l'évolution des différentielles de pression dans le procédé d'un essai avec injection par impulsion de soude (trait gras) et d'un essai sans injection de soude selon un mode de réalisation particulier décrit dans l'exemple 3.

Les termes « selon l'invention » définissent l'un quelconque des modes de réalisation, variantes, et caractéristiques avantageuses ou préférées, pris seuls ou selon l'une quelconque de leurs combinaisons.

D'autres buts, caractéristiques et avantages de l'invention apparaîtront clairement à l'homme de l'art suite à la lecture de la description explicative qui fait référence à des exemples qui sont donnés seulement à titre d'illustration et qui ne sauraient en aucune façon limiter la portée de l'invention.

Les exemples font partie intégrante de la présente invention et toute caractéristique apparaissant nouvelle par rapport à un état de la technique antérieure quelconque à partir de la description prise dans son ensemble, incluant les exemples, fait partie intégrante de l'invention dans sa fonction et dans sa généralité.

Ainsi, chaque exemple a une portée générale.

D'autre part, dans les exemples, tous les pourcentages sont donnés en masse, sauf indication contraire, la température est celle ambiante 20-25°C et exprimée en degré Celsius sauf indication contraire, la pression est la pression atmosphérique (101325 Pa), sauf indication contraire.

### Exemples

### Exemple 1 (figures 1 et 2)

Il a été mis en évidence que la soude précipite en conditions hydrothermales supercritiques, puis que cette soude précipitée fond pour former une phase liquide non miscible avec la phase aqueuse supercritique.

Le montage expérimental est composé d'un tube métallique dans lequel circule en continu une solution de soude de concentration connue. Le tube est chauffé à la température voulue et pressurisé à 25 MPa. Le tube est à moitié rempli d'un filtre composé de billes de carbone amorphe de taille micrométrique, d'une part afin d'empêcher les sels inorganiques précipités solides d'être entrainés dans le flux, d'autre part afin de pouvoir ralentir l'écoulement de la soude liquide et de permettre de mesurer une concentration à saturation.

Du fait des différences de densité et de viscosité entre la soude fondue et l'eau en conditions supercritiques, les deux phases ne s'écoulent pas à la même vitesse au travers du filtre (qui agit comme un milieu poreux), ce qui permet de pouvoir mesurer en sortie la concentration à saturation en sel restant dans l'eau (par prélèvement et mesure de spectrométrie ICP), qui correspond en fait à sa valeur de solubilité pour la température donnée.

Après un certain temps, la concentration en sel revient à sa valeur initiale, ce qui signale le moment où l'écoulement du sel fondu a atteint la sortie du montage et le système est alors en régime stationnaire. On réitère l'opération pour différentes températures et ainsi on obtient la courbe de solubilité du sel en question (Figure 2).

La connaissance de ces valeurs de solubilité du sel d'hydroxyde est déterminante pour pouvoir évaluer la proportion de la phase sel fondu formée après précipitation, et immiscible avec la phase aqueuse supercritique. Cette proportion est notamment nécessaire afin de déterminer la quantité maximale de sel soluble dans cette phase sel fondu.

### Exemple 2 (figures 3 et 4)

Pour déterminer la quantité maximale de sel inorganique soluble dans la phase sel fondu, une méthodologie expérimentale, utilisant le montage précédent, a été mise en place.

Une première partie consiste à injecter une solution aqueuse de sulfate de sodium (Na₂SO₄), de concentration connue, afin de faire précipiter le sel et effectuer un dépôt sur les parois du réacteur. La concentration en sortie du sel inorganique est bien celle de la limite de solubilité dans les conditions de température et de pression données.

Dans un second temps, l'injection de la solution salée est interrompue pour pouvoir injecter une solution de soude (NaOH) de concentration connue dans le système. La soude précipite, puis fond. Elle vient alors dissoudre le dépôt de Na₂SO₄, qui est alors entrainé dans le flux avec la soude. Le sulfate de sodium se re-dissout ensuite dans l'eau en conditions souscritiques. On mesure par prélèvement en sortie, les concentrations respectives en NaOH et en Na₂SO₄ afin de mesurer la proportion de sel dissout par la soude fondue (connaissant la solubilité de Na₂SO₄). Plusieurs prélèvements à intervalles de temps réguliers, pour une même température, sont effectués afin de vérifier que la concentration limite en sel dans la soude a bien été atteinte.

Les données de fractions massiques de Na₂SO₄ contenues dans la phase sel fondu de soude, en fonction du temps et de la concentration de la solution de soude, tendent à montrer que la saturation semble se situer autour de 40% massique en sel dans la soude, pour des températures entre 400 et 420 °C à 25 MPa. Pour les plus hautes concentrations de soude, le dépôt de sel effectué ne semble pas suffisant pour permettre plusieurs mesures à saturation avant que tout le sel soit consommé.

Par ailleurs, aucune trace de corrosion n'a été détectée lors de ces tests (concentrations en Ni et Cr inférieures à la limite de détection de 1 ppm).

### Exemple 3 (figure 5)

Des tests ont été réalisés à échelle industrielle. Dans un premier temps, un déchet type, composé d'un mélange eau/butanol/propanol contenant du sulfate de sodium à une concentration de 5 g/L, est traité par procédé d'oxydation hydrothermale supercritique pour permettre une exothermie d'oxydation suffisante. La présence d'alcool permet de placer le mélange en conditions supercritiques par réaction avec le dioxygène.

On mesure au bout de combien de temps le procédé doit être interrompu en raison de l'obstruction du dispositif par le dépôt du sel inorganique.

Dans un second temps, le même produit est traité de manière identique, à la différence près qu'une injection temporaire de solution de hexanediol/eau/soude est effectuée régulièrement afin de réduire l'obstruction du réacteur par le sel.

Le résultat de ces tests préliminaires a montré que le temps de fonctionnement du procédé a pu être doublé avant de devoir interrompre l'essai. Il y a donc un effet significativement positif de la soude sur le temps d'obstruction du procédé du fait de la présence de sel inorganique dans le produit à traiter.

De plus, aucune trace de corrosion n'a été observée.

### Exemple 4 (exemple théorique)

En connaissant la concentration en sel inorganique d'un déchet à traiter par procédé d'oxydation hydrothermale supercritique, il est possible de calculer la quantité de soude et le temps d'injection nécessaire pour dissoudre ce sel inorganique.

Par exemple, un déchet à traiter par procédé d'oxydation hydrothermale supercritique contient un sel inorganique de sulfate de sodium à une concentration de 5 g/L. L'effluent est injecté dans le procédé à un débit de 90 kg/h.

Pour cette concentration, la précipitation survient à partir d'une température de 380°C pour une pression de 25 MPa, la concentration en sel dans la phase aqueuse tombe alors à une valeur de 5 ppm. La quantité de sel déposé dans le procédé peut alors être estimée à 449.55 g/h. Un temps de traitement du déchet de 15 min est choisi, afin de pouvoir ensuite injecter une solution de soude, d'une concentration de 4 g/L. A 380°C, la solubilité de la soude est de 200 ppm, ce qui signifie que la quantité de soude fondue formée est de 342 g/h.

En sachant que la fraction massique maximale de sel dans la soude fondue est de 40%, on peut alors déduire des calculs précédents le temps d'injection de soude nécessaire afin de dissoudre la quantité de sel déposé précédemment. Il faudrait alors une injection de 30 min pour dissoudre l'intégralité du sel à l'aide de la soude fondue.

### Exemple 5

Un mélange aqueux composé d'eau et de soude de concentration 30 g/L est introduit dans un réacteur batch. L'ensemble est porté en conditions supercritiques à 25 MPa et 500°C. Après le maintien de ces conditions pendant 60 minutes, l'ensemble est refroidi et dépressurisé. La solution restante est alors analysée par mesures de spectrométrie ICP. La quasi-totalité de la quantité de sodium initialement introduite est présente dans la phase aqueuse. Aucune trace de corrosion n'est décelée (taux de Chrome et Nickel inférieurs à 1 ppm) et il n'y a pas de traces de précipitation sur les parois du réacteur.

Cet exemple montre qu'un procédé et dispositif selon l'invention ne colmate pas et ne subit pas de corrosion.

### Exemple 6

Un mélange aqueux composé d'eau et de soude de concentration 30 g/L est préparé. Le montage utilisé consiste en un réacteur tubulaire de 1 mètre de long, de diamètre ¾ de pouce, composé d'inconel. Le système fonctionne en continue à l'aide d'un pompe haute pression et d'une vanne de régulation de la pression en sortie de montage. La solution aqueuse est ainsi injectée à un débit compris entre 0,5 et 1,5 L/h, l'ensemble est maintenu à une pression de 25 MPa et la température du réacteur tubulaire est portée à 450°C. L'ensemble est maintenu dans ces conditions pendant une heure sans qu'aucune surpression ne soit observée. Le système est ensuite arrêté et refroidi. Aucun dépôt solide n'est présent dans le réacteur et aucune trace de corrosion n'est détectée dans les échantillons prélevés en sortie de montage au cours de l'essai.

Cet exemple montre qu'un procédé et dispositif selon l'invention ne colmate pas et ne subit pas de corrosion.

## Revendications

1. Procédé comprenant :
l'entrée dans un dispositif d'un fluide aqueux contenant au moins un sel inorganique, l'eau du fluide aqueux étant en conditions supercritiques ou proches du domaine supercritique dans le dispositif,
la mesure de la concentration ou la quantité de sel inorganique dans le dispositif, cette mesure étant de préférence réalisée avant l'entrée du sel inorganique dans le dispositif,
la mise en contact du sel inorganique avec un flux aqueux contenant au moins un sel d'hydroxyde pour obtenir dans le dispositif un mélange fluide aqueux contenant un sel inorganique et un sel d'hydroxyde fondu,l'ajustement de la concentration ou la quantité du sel d'hydroxyde en fonction de la concentration ou la quantité du sel inorganique pour solubiliser au moins en partie le sel inorganique dans le sel d'hydroxyde fondu, et
de préférence la mesure de la concentration ou la quantité de sel inorganique sortant du dispositif.

2. Procédé selon la revendication 1 dans lequel l'ajustement de la concentration ou de la quantité du sel d'hydroxyde en fonction de la concentration ou la quantité du sel inorganique est mis en oeuvre de façon répétée discontinue ou en continu.

3. Procédé selon la revendication 1 ou 2 dans lequel l'ajustement de la concentration ou de la quantité du sel d'hydroxyde en fonction de la concentration ou la quantité du sel inorganique comprend un suivi de la concentration en sel inorganique en entrée et/ou en sortie du dispositif.

4. Procédé selon l'une quelconque des revendications précédentes dans lequel le mélange aqueux est chauffé entre 300°C et 600°C et porté à une pression comprise entre 22,1 et 50 MPa, par exemple entre 22,1 et 30 MPa.

5. Procédé selon l'une quelconque des revendications précédentes dans lequel le mélange aqueux est chauffé entre 350°C et 550°C et porté à une pression comprise entre 22.1 et 50 MPa, avantageusement entre 22.1 et 30 MPa.

6. Procédé selon l'une quelconque des revendications précédentes dans lequel le fluide aqueux contenant au moins un sel inorganique comprend en outre des composés organiques.

7. Procédé selon l'une quelconque des revendications précédentes dans lequel le sel d'hydroxyde est choisi parmi l'hydroxyde de potassium, l'hydroxyde de sodium et l'hydroxyde de lithium.

8. Procédé selon l'une quelconque des revendications précédentes dans lequel le fluide aqueux contenant le sel d'hydroxyde est injecté dans le dispositif alternativement au fluide aqueux contenant le sel inorganique.

9. Procédé selon l'une quelconque des revendications 1 à 7 dans lequel le fluide aqueux contenant le sel d'hydroxyde est mélangé au fluide aqueux contenant le sel inorganique avant l'entrée de ce dernier dans le dispositif.

10. Procédé selon l'une quelconque des revendications 1 à 7 dans lequel le fluide aqueux contenant le sel d'hydroxyde est injecté en discontinu par impulsion dans le dispositif.

11. Procédé selon la revendication 10 dans lequel le différentiel de pression entre l'entrée et la sortie du dispositif est mesuré et le fluide aqueux contenant le sel d'hydroxyde est injecté quand ledit différentiel dépasse une valeur seuil de différentiel de pression prédéterminée.

12. Procédé selon l'une quelconque des revendications précédentes comprenant une étape préliminaire de mesure de la solubilité du sel d'hydroxyde dans le mélange fluide aqueux en conditions supercritiques.

13. Procédé selon l'une quelconque des revendications précédentes comprenant une étape préliminaire de mesure de la solubilité du sel inorganique dans le sel d'hydroxyde fondu en conditions supercritiques.

14. Procédé selon l'une quelconque des revendications précédentes **caractérisé en ce qu'**il s'agit d'un procédé d'oxydation hydrothermale supercritique de traitement d'un fluide aqueux contenant des sels inorganiques.

15. Dispositif susceptible de fonctionner en conditions supercritiques comprenant :
des moyens de chauffage et mise sous pression aptes à placer de l'eau en conditions proches du domaine supercritique ou supercritiques,
une conduite d'introduction dans le dispositif d'un fluide aqueux contenant au moins un sel inorganique,
un dispositif de mesure de la concentration ou la quantité de sel inorganique dans le dispositif, de préférence la mesure étant effectuée avant l'entrée du sel inorganique dans le dispositif,
une conduite pour la mise en contact du sel inorganique avec un flux de fluide aqueux contenant au moins un sel d'hydroxyde pour obtenir dans le dispositif un mélange fluide aqueux contenant un sel inorganique et un sel d'hydroxyde fondu,
un dispositif d'ajustement de la concentration ou la quantité du sel d'hydroxyde en fonction de la concentration ou la quantité du sel inorganique pour solubiliser au moins en partie le sel inorganique dans le sel d'hydroxyde fondu, et
de préférence un dispositif de mesure de la concentration ou la quantité de sel inorganique sortant du dispositif.

16. Dispositif de mesure de la solubilité d'un sel d'hydroxyde dans un mélange fluide aqueux susceptible de fonctionner en conditions supercritiques comprenant :
des moyens de chauffage et mise sous pression aptes à placer de l'eau en conditions proches du domaine supercritique ou supercritiques,
une conduite d'introduction dans le dispositif d'un fluide aqueux contenant au moins un sel inorganique,
un dispositif de mesure de la concentration ou la quantité de sel inorganique entrant dans le dispositif,
une conduite pour la mise en contact du sel inorganique avec un flux de fluide aqueux contenant au moins un sel d'hydroxyde pour obtenir dans le dispositif un mélange fluide aqueux contenant un sel inorganique et un sel d'hydroxyde fondu, ladite conduite comprenant un filtre, de préférence composé de billes de carbone amorphe de taille micrométrique, apte à retenir les sels inorganiques précipités et apte à faire écouler moins rapidement le sel d'hydroxyde fondu que le fluide aqueux,
un dispositif de mesure de la concentration à saturation du sel d'hydroxyde dans le mélange fluide aqueux.

## Patentansprüche

1. Verfahren, umfassend:
Einleiten eines wässrigen Fluids, das mindestens ein anorganisches Salz enthält, in eine Vorrichtung, wobei das Wasser des wässrigen Fluids in der Vorrichtung unter superkritischen Bedingungen oder nahe dem superkritischen Bereich ist,
Messen der Konzentration oder Menge des anorganischen Salzes in der Vorrichtung, wobei dieses Messen vorzugsweise vor Einleiten des anorganischen Salzes in die Vorrichtung erfolgt,
Inkontaktbringen des anorganischen Salzes mit einem wässrigen Strom, der mindestens ein Hydroxidsalz enthält, um in der Vorrichtung eine wässrige Fluidmischung zu erlangen, die ein anorganisches Salz und ein geschmolzenes Hydroxidsalz enthält, Einstellen der Konzentration oder Menge des Hydroxidsalzes abhängig von der Konzentration oder Menge des anorganischen Salzes, um das anorganische Salz in dem geschmolzenen Hydroxidsalz mindestens teilweise zu solubilisieren, und
vorzugsweise Messen der Konzentration oder der Menge des anorganischen Salzes, das aus der Vorrichtung austritt.

2. Verfahren nach Anspruch 1, wobei das Einstellen der Konzentration oder Menge des Hydroxidsalzes abhängig von der Konzentration oder Menge des anorganischen Salzes wiederholt diskontinuierlich oder kontinuierlich durchgeführt wird.

3. Verfahren nach Anspruch 1 oder 2, wobei das Einstellen der Konzentration oder Menge des Hydroxidsalzes abhängig von der Konzentration oder Menge des anorganischen Salzes ein Überwachen der Konzentration des anorganischen Salzes am Eingang und/oder am Ausgang der Vorrichtung umfasst.

4. Verfahren nach einem der vorherigen Ansprüche, wobei das wässrige Gemisch auf 300 °C bis 600 °C erhitzt und auf einen Druck zwischen 22,1 und 50 MPa, beispielsweise 22,1 und 30 MPa, gebracht wird.

5. Verfahren nach einem der vorherigen Ansprüche, wobei das wässrige Gemisch auf 350 °C bis 550 °C erhitzt und auf einen Druck zwischen 22,1 und 50 MPa, vorteilhafterweise 22,1 und 30 MPa, gebracht wird.

6. Verfahren nach einem der vorherigen Ansprüche, wobei das wässrige Fluid, das mindestens ein anorganisches Salz enthält, zusätzlich organische Verbindungen umfasst.

7. Verfahren nach einem der vorherigen Ansprüche, wobei das Hydroxidsalz ausgewählt ist aus Kaliumhydroxid, Natriumhydroxid und Lithiumhydroxid.

8. Verfahren nach einem der vorherigen Ansprüche, wobei das wässrige Fluid, das das Hydroxidsalz enthält, abwechselnd mit dem wässrigen Fluid, das das anorganische Salz enthält, in die Vorrichtung eingespritzt wird.

9. Verfahren nach einem der Ansprüche 1 bis 7, wobei die wässrige Flüssigkeit, die das Hydroxidsalz enthält, mit der wässrigen Flüssigkeit, die das anorganische Salz enthält, gemischt wird, bevor letzteres in die Vorrichtung gelangt.

10. Verfahren nach einem der Ansprüche 1 bis 7, wobei die wässrige Flüssigkeit, die das Hydroxidsalz enthält, diskontinuierlich impulsweise in die Vorrichtung eingespritzt wird.

11. Verfahren nach Anspruch 10, wobei die Druckdifferenz zwischen dem Eingang und dem Ausgang der Vorrichtung gemessen wird und das wässrige Fluid, das das Hydroxidsalz enthält, eingespritzt wird, wenn die Differenz einen vorbestimmten Druckdifferenz-Schwellenwert überschreitet.

12. Verfahren nach einem der vorherigen Ansprüche, umfassend einen einleitenden Schritt eines Messens der Löslichkeit des Hydroxidsalzes in dem wässrigen Fluidgemisch unter überkritischen Bedingungen.

13. Verfahren nach einem der vorherigen Ansprüche, umfassend einen einleitenden Schritt eines Messens der Löslichkeit des anorganischen Salzes in dem geschmolzenen Hydroxidsalz unter überkritischen Bedingungen.

14. Verfahren nach einem der vorherigen Ansprüche, **dadurch gekennzeichnet, dass** es sich um ein überkritisches hydrothermales Oxidationsverfahren zum Behandeln eines wässrigen Fluids handelt, das anorganische Salze enthält.

15. Vorrichtung, die unter überkritischen Bedingungen betrieben werden kann, umfassend:
Einrichtungen zum Erhitzen und Unter-Druck-Setzen, die geeignet sind, um Wasser unter Bedingungen zu setzen, die nahe an dem überkritischen oder überkritischen Bereich sind,
eine Leitung zum Einführen eines wässrigen Fluids, das mindestens ein anorganisches Salz enthält, in die Vorrichtung,
eine Vorrichtung zum Messen der Konzentration oder der Menge des anorganischen Salzes in der Vorrichtung, wobei das Messen vorzugsweise vor dem Eintritt des anorganischen Salzes in die Vorrichtung erfolgt,
eine Leitung zum Inkontaktbringen des anorganischen Salzes mit einem wässrigen Fluidstrom, der mindestens ein Hydroxidsalz enthält, um in der Vorrichtung ein wässriges Fluidgemisch zu erlangen, das ein anorganisches Salz und ein geschmolzenes Hydroxidsalz enthält,
eine Vorrichtung zum Einstellen der Konzentration oder Menge des Hydroxidsalzes abhängig von der Konzentration oder Menge des anorganischen Salzes, um das anorganische Salz in dem geschmolzenen Hydroxidsalz zumindest teilweise zu solubilisieren, und
vorzugsweise eine Vorrichtung zum Messen der Konzentration oder Menge des anorganischen Salzes, das aus der Vorrichtung austritt.

16. Vorrichtung zum Messen der Löslichkeit eines Hydroxidsalzes in einem wässrigen Fluidgemisch, das unter überkritischen Bedingungen betrieben werden kann, umfassend:
Einrichtungen zum Erhitzen und Unter-Druck-Setzen, die geeignet sind, um Wasser unter Bedingungen zu setzen, die nahe an dem überkritischen oder überkritischen Bereich sind,
eine Leitung zum Einführen eines wässrigen Fluids, das mindestens ein anorganisches Salz enthält, in die Vorrichtung,
eine Vorrichtung zum Messen der Konzentration oder Menge des anorganischen Salzes, das in die Vorrichtung eintritt,
eine Leitung zum Inkontaktbringen des anorganischen Salzes mit einem wässrigen Fluidstrom, der mindestens ein Hydroxidsalz enthält, um in der Vorrichtung ein wässriges Fluidgemisch zu erlangen, das ein anorganisches Salz und ein geschmolzenes Hydroxidsalz enthält, wobei die Leitung einen Filter umfasst, der vorzugsweise aus mikrometergroßen amorphen Kohlenstoffkugeln besteht, der geeignet ist, präzipitierte anorganische Salze zurückzuhalten, und geeignet ist, um das geschmolzene Hydroxidsalz langsamer fließen zu lassen als das wässrige Fluid,
eine Vorrichtung zum Messen der Sättigungskonzentration des Hydroxidsalzes in dem wässrigen Fluidgemisch.

## Claims

1. Process comprising:
the entry into a device of an aqueous fluid containing at least one inorganic salt, the water of the aqueous fluid in the device being under supercritical conditions or close to the supercritical range,
the measurement of the concentration or the amount of inorganic salt in the device, wherein this measurement is preferably carried out before the entry of the inorganic salt into the device,
the bringing into contact of the inorganic salt with an aqueous stream containing at least one hydroxide salt, so as to obtain an aqueous fluid mixture in the device containing an inorganic salt and a molten hydroxide salt,
the adjustment of the concentration or amount of the hydroxide salt as a function of the concentration or amount of the inorganic salt needed to at least partially solubilize the inorganic salt in the molten hydroxide salt, and, preferably, the measurement of the concentration or the quantity of inorganic salt leaving the device.

2. Process according to claim 1 wherein the adjustment of the concentration or the amount of the hydroxide salt according to the concentration or the amount of the inorganic salt is carried out repeatedly, discontinuously or continuously.

3. Process according to claim 1 or 2, wherein adjusting the concentration or the amount of the hydroxide salt as a function of the concentration or the amount of the inorganic salt comprises monitoring the concentration of inorganic salt at the inlet and/or at the outlet of the device.

4. Process according to any one of the preceding claims wherein the aqueous mixture is heated to between 300°C and 600°C, and brought to a pressure between 22.1 and 50 MPa, for example between 22.1 and 30 MPa .

5. Process according to any one of the preceding claims wherein the aqueous mixture is heated to between 350°C and 550°C, and brought to a pressure between 22.1 and 50 MPa, advantageously between 22.1 and 30 MPa.

6. Process according to any one of the preceding claims wherein the aqueous fluid containing at least one inorganic salt further comprises organic compounds.

7. Process according to any one of the preceding claims wherein the hydroxide salt is chosen from among potassium hydroxide, sodium hydroxide and lithium hydroxide.

8. Process according to any one of the preceding claims wherein the aqueous fluid containing the hydroxide salt is injected into the device alternately with the aqueous fluid containing the inorganic salt.

9. Process according to any one of claims 1 to 7 wherein the aqueous fluid containing the hydroxide salt is mixed with the aqueous fluid containing the inorganic salt before the latter enters the device.

10. Process according to any one of claims 1 to 7 wherein the aqueous fluid containing the hydroxide salt is injected discontinuously by pulse into the device.

11. Process according to claim 10 wherein the pressure differential between the inlet and the outlet of the device is measured, and the aqueous fluid containing the hydroxide salt is injected when said pressure differential exceeds a predetermined threshold value.

12. Process according to any one of the preceding claims comprising a preliminary step of measuring the solubility of the hydroxide salt in the aqueous fluid mixture under supercritical conditions.

13. Process according to any one of the preceding claims comprising a preliminary step of measuring the solubility of the inorganic salt in the molten hydroxide salt under supercritical conditions.

14. Process according to any one of the preceding claims, **characterized in that** it is a supercritical hydrothermal oxidation process for the treatment of an aqueous fluid containing inorganic salts.

15. Device capable of operating in supercritical conditions comprising:
heating and pressurizing means capable of placing water in conditions close to the supercritical range(s) or under supercritical conditions,
a line for introducing into the device an aqueous fluid containing at least one inorganic salt,
a device for measuring the concentration or the amount of inorganic salt in the device, wherein the measurement is preferably carried out before the entry of the inorganic salt into the device,
a line for bringing the inorganic salt into contact with an aqueous fluid flow containing at least one hydroxide salt in order to obtain in the device an aqueous fluid mixture containing an inorganic salt and a molten hydroxide salt,
a device for adjusting the concentration or the amount of the hydroxide salt as a function of the concentration or the amount of the inorganic salt to at least partially dissolve the inorganic salt in the molten hydroxide salt, and
preferably a device for measuring the concentration or the amount of inorganic salt leaving the device.

16. Device for measuring the solubility of a hydroxide salt in an aqueous fluid mixture capable of operating in supercritical conditions comprising:
heating and pressurizing means capable of placing water under conditions close to the supercritical range(s) or under supercritical conditions,
a line for introducing into the device an aqueous fluid containing at least one inorganic salt,
a device for measuring the concentration or amount of inorganic salt entering the device,
a line for bringing the inorganic salt into contact with an aqueous fluid stream containing at least one hydroxide salt in order to obtain in the device an aqueous fluid mixture containing an inorganic salt and a molten hydroxide salt, said line comprising a filter, preferably composed of amorphous carbon beads of micrometric size, capable of retaining the precipitated inorganic salts, and capable of causing the molten hydroxide salt to flow less rapidly than the aqueous fluid,
a device for measuring the saturation concentration of the hydroxide salt in the aqueous fluid mixture.
